Europäisches Patentamt

European Patent Office

Office européen des brevets

(11) Publication number: **0 056 182**
**A1**

(19)

# (12) EUROPEAN PATENT APPLICATION

(21) Application number: **81305679.3**

(22) Date of filing: **02.12.81**

(51) Int. Cl.³: **H 01 M 4/36,** H 01 M 6/50, H 01 M 6/16

(30) Priority: **03.12.80 US 212699**

(43) Date of publication of application: **21.07.82**
**Bulletin 82/29**

(84) Designated Contracting States: **DE FR GB**

(71) Applicant: **Ray-O-Vac Corporation, 101 East Washington Avenue, Madison WI 53703 (US)**

(72) Inventor: **Ashok, Venimadhav Joshi, 117 Shankar Niwas Shivaji Park Road No. 3, Bombay (IN)**
Inventor: **Nehemiah, Margalit, Booth Road Chester, New York 10918 (US)**

(74) Representative: **Dixon, Sarah et al, c/o C H Greenstreet Thames House (Fifth Floor) Millbank, London SW1P 4QF (GB)**

(54) **Process for preparing a stable cathode mass for an electrochemical cell and cells employing such a cathode mass.**

(57) The process comprises treating a solid non-stoichiometric cathode material represented by the formula $M_aY_b$ with a solution of a compound of an active metal, the compound being such that the active metal therein is capable of forming a compound with the element Y. Preferably the active metal is lithium.

EP 0 056 182 A1

ACTORUM AG

- 1 -

Process for preparing a stable cathode
mass for an electrochemical cell, and
cells employing such a cathode mass

This invention relates to a process for
preparing a stable cathode mass for an electrochemical
cell from a solid non-stoichiometric cathode material,
and to cells employing such a cathode mass.

Certain non-stoichiometric materials may be
used as cathode materials in electrochemical cells,
particularly cells having active metal anodes. For
convenience, such materials are often designated by a
stoichiometric formula $M_aY_b$ e.g. FeS, $MnO_2$, $TiS_2$,
$(CF_x)_n$, $Cr_2O_3$ although they do not have the composition
indicated by the formula. In fact, they will contain
impurities and an excess of the element represented by Y.
Because of the presence of these impurities and the excess
of element Y, electrochemical cells having cathodes
made of such compounds tend to have anomalously high
initial open circuit voltages (OCV's) and high initial
discharge plateaus.

In voltage sensitive solid-state devices, it
is undesirable to use an electrochemical cell which
exhibits a high initial OCV. For this reason, cells
containing such cathodes are usually subject to an initial
discharge of about 5% to 10% of the cell capacity at a low
drain rate to bring the cell to a stable voltage prior
to use. This discharge operation constitutes an
additional manufacturing step and may be time consuming
and therefore expensive.

It has now surprisingly been discovered that
the open circuit voltage of an electrochemical cell
having an active metal anode and a cathode made from a
non-stoichiometric material may be stabilized at or near
the equilibrium open circuit voltage of the cell by
subjecting the cathode material to a chemical reduction
step.

Accordingly, the present invention provides a process for preparing a stable cathode mass for use in an electrochemical cell having an active metal anode, which process comprises treating a solid non-stoichiometric cathode material represented by the formula $M_aY_b$ with a solution of a compound of an active metal, the compound being such that the active metal therein is capable of forming a compound with the element Y.

The invention also extends to an electrochemical cell having an active metal anode and a cathode mass prepared by this process.

Preferably, the active metal compound is a compound of the active metal employed as the anode in the cell in which the cathode mass is to be used. The term "active metal" as used herein denotes an alkali metal or alkaline earth metal. As those skilled in the art are aware, such metals (in particular lithium) may be used as anodes in solid-state electrochemical cells. Lithium is a preferred active metal both in the active metal compound and as anode in an electrochemical cell which includes a cathode mass treated according to the process of the present invention.

The active metal compound used must be such that the active metal therein is capable of reacting with the element Y. Such compounds include metal alkyls and aryls. Suitable active metal compounds are butyl lithium, ethyl lithium and phenyl lithium. When a metal alkyl or aryl reacts with a non-stoichiometric $M_aY_b$ type compound, the reaction products are stoichiometric $M_aY_b$, a metal -Y compound and a hydrocarbon produced by the combination of two alkyl or aryl radicals. There may also be some complete reduction of $M_aY_b$ to M at the surface of the material being treated. Metal alkyls, and in particular lithium alkyls in which the alkyl moiety has less than 6 carbon atoms, are particularly preferred since the hydrocarbon formed may be readily removed from the treated cathode mass by volatilization.   Solvated ammoniacal compounds formed when an active metal, particularly an alkali metal, is dissolved in liquid ammonia may also be used as active metal compounds.

The active metal compound must be applied as a liquid to the cathode material to be treated.   In practice, the active metal compound is applied dissolved in a solvent.   Preferably, the solvent is such that it can contain in solution at room temperature at least about 0.01 moles of active metal compound. In addition, the solvent should not react with the active metal compound in such a way as to prevent the latter reacting with the cathode material, nor should it react with the cathode material either in its non-stoichiometric or its stoichiometric state.   The solvent should also be easily removable from the cathode material after treatment. When the active compound is a metal alkyl or aryl, liquid hydrocarbons such as n-hexane, 2 methyl pentane, n-heptane, and 3-ethyl pentane are suitable solvents. If the active metal compound is a solvated ammoniacal metal compound, excess liquid ammonia will usually function as the solvent.

The compound formed by reaction of the active metal with excess element Y will remain in the cathode mass unless steps are taken to remove it.   This product (for example $Li_2S$ in the case of treatment of FeS with a lithium compound) may be an electrolytic conductor and/or may form part of the electrolyte (either solid state or in solution) of the completed cell.   In the preferred process in which the metal of the anode and the active metal compound are the same, the presence of the reaction product in the cell causes few problems.

Preferably, the process of the present invention is carried out on a preformed cathode mass of non-stoichiometric cathode material.   The preformed mass may be in the form of a compressed pellet, usually a squat, right cylinder of a diameter suitable for use in a button cell. The advantage of treating a preformed mass is that while it will be porous to some extent allowing penetration of the solution of active metal compound to the interior, most of the reaction will be confined to the exterior of the mass which is accessible to excess solution. Thus a preformed cathode mass treated in accordance with the process of the present invention will have a metal-rich skin which facilitates current pickup by the cathode contact means.

The length of time for which the cathode material is treated and the temperature at which treatment is effected are not critical and may be selected in accordance with the result desired and solution used. For example, using one molar solutions of lithium alkyls, it has been found that treatment times of about 1 to 5 minutes at room temperature are satisfactory for pelleted iron sulphide cathodes.

The invention will now be further described with reference to the following example.

### EXAMPLE

Ten iron sulphide pellets in the form of squat right cylinders each about 1.7 mm thick and weighing 0.5 g were made. The pellets were treated with a 1.0 M solution of butyl lithium in hexane at room temperature for varying times as set out in the Table below. The solution was then removed and residual solvent was volatilised. The pellets were installed as cathodes in button cells each weighing about 1.4 g and having a lithium anode, a separator system and an electrolyte comprising a molar solution of $LiAsF_6$ in an equal weight mixture of propylene carbonate and dimethoxyethane. The following Table sets out the treatment time of the cathode mass of each cell and the OCV of the cell after half an hour and after two hours.

TABLE

| Cell | Treatment Time (mins) | OCV at 0.5 hr (V) | OCV at 2.0 hr (V) |
|------|------------------------|--------------------|--------------------|
| 1 | 3 | 1.718 | 1.752 |
| 2 | 3 | 1.726 | 1.725 |
| 3 | 3 | 1.722 | 1.722 |
| 4 | 3 | 1.732 | 1.731 |
| 5 | 3 | 1.717 | 1.717 |
| 6 | 1.5 | 1.754 | 1.721 |
| 7 | 1.5 | 1.746 | 1.723 |
| 8 | 1.5 | 1.759 | 1.722 |
| 9 | 1.5 | 1.761 | 1.731 |
| 10 | 1.5 | 1.755 | 1.717 |

From the Table, it may be seen that the initial OCV of cells according to the present invention was about 1.7 volts and that little decay in OCV was observed after 2 hours.

Untreated non-stoichiometric iron sulphide cathode pellets tested in similar cells are expected to exhibit initial OCV's of about 2.7 volts which decay in use or preuse discharge to the stable value of about 1.7 volts.

## Claims

1. A process for preparing a stable cathode mass for use in an electrochemical cell having an active metal anode, which process comprises treating a solid non-stoichiometric cathode material represented by the formula $M_aY_b$ with a solution of a compound of an active metal, the compound being such that the active metal therein is capable of forming a compound with the element Y.

2. A process as claimed in claim 1, wherein the active metal compound is an active metal alkyl or aryl.

3. A process as claimed in claim 1 or 2, wherein the same active metal is used for the anode and in the active metal compound.

4. A process as claimed in claim 3, wherein the active metal is lithium.

5. A process as claimed in claim 4, wherein the active metal compound is butyl lithium.

6. An electrochemical cell having an active metal anode and a cathode mass prepared by a process as claimed in any one of the preceding claims.

0056182

European Patent
Office

**EUROPEAN SEARCH REPORT**

Application number

EP 81 30 5679

## DOCUMENTS CONSIDERED TO BE RELEVANT

| Category | Citation of document with indication, where appropriate, of relevant passages | Relevant to claim |
|---|---|---|
| A | CHEMICAL ABSTRACTS, vol. 88, no. 6, February 6, 1978, page 116, abstract no. 39751n COLUMBUS, Ohio (US) & JP - A - 77 73 331 (HITACHI MAXELL LTD.)(June 20, 1977)  * the whole abstract *  -- | 1 |
| A | CHEMICAL ABSTRACTS, vol. 88, no. 22, May 29, 1978, page 189, abstract no. 155724e COLUMBUS, Ohio (US) & JP - A - 77 73 328 (HITACHI MAXELL LTD.)(December 17, 1975)  * the whole abstract *  -- | 1 |
| A | CHEMICAL ABSTRACTS, vol. 92, no. 4, January 1980, page 205, abstract no. 25591f COLUMBUS, Ohio (US) & JP - A - 79 129 320 (SANYO ELECTRIC CO., LTD.)(October 6, 1979)  * the whole abstract *  -- | 1 |
| A | CHEMICAL ABSTRACTS, vol. 90, no. 8, February 1979, page 564, abstract no. 63569w COLUMBUS, Ohio (US) & JP - A - 78 123 835 (HITACHI MAXELL LTD.)(October 28, 1978)  * the whole abstract *  -- | 1 |

./.

**CLASSIFICATION OF THE APPLICATION (Int. Cl. 3)**

H 01 M 4/36
6/50
6/16

**TECHNICAL FIELDS SEARCHED (Int.Cl. 3)**

H 01 M 4/36
4/48
4/58
6/50

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 25-03-1982 | D'HONDT |

EPO Form 1503.1 06.78

0056182

| | **DOCUMENTS CONSIDERED TO BE RELEVANT** | | | CLASSIFICATION OF THE APPLICATION (Int. Cl.³) |
|---|---|---|---|---|
| Category | Citation of document with indication, where appropriate, of relevant passages | | Relevant to claim | |
| A | GB - A - 2 030 352 (WESTERN ELECTRIC) <br><br> * claim 1; page 3, lines 3-13 * | | 1,5 | |
| A | JOURNAL OF THE ELECTROCHEMICAL SOCIETY, vol. 127, no. 11, November 1980 MANCHESTER, N.H. (US) P.A. CHRISTIAN et al.:"Molybdenum Oxide Cathodes in Secondary Lithium Cells" pages 2315-2319 <br><br> * abstract; page 2316, right-hand column, lines 2-12; page 2316, right-hand column, lines 5-9 * | | 1,5 | TECHNICAL FIELDS SEARCHED (Int. Cl.³) |
| A | JOURNAL OF THE ELECTROCHEMICAL SOCIETY, vol. 126, no. 12, December 1979 MANCHESTER, N.H. (US) A.J. JACOBSON et al.:"Amorphous Molybdenum Disulfide Cathodes" pages 2277-2278 <br><br> * page 2277, left-hand column, lines 10-18 * | | 1,5 | |
| E | PATENT ABSTRACTS OF JAPAN, vol. 5, no. 82, May 29, 1981, page E 59 754 & JP - A - 56 30 263 (MATSUSHITA DENKI SANGYO K.K.)(March 26, 1981) <br><br> * the whole abstract * | | 1-4,6 | |

./.

EPO Form 1503.2  06.78

0056182

European Patent Office

**EUROPEAN SEARCH REPORT**

Application number

EP 81 30 5679

| Category | Citation of document with indication, where appropriate, of relevant passages | Relevant to claim | |
|---|---|---|---|
| | **DOCUMENTS CONSIDERED TO BE RELEVANT** | | **CLASSIFICATION OF THE APPLICATION (Int. Cl.3)** |
| E | FR - A - 2 469 010 (DURACELL INT. CORP.)<br><br>* claims 1,3,5,7,8; page 3, line 29 - page 4, line 23; page 7, lines 2-10 *<br><br>& GB - A - 2 064 205<br>& DE - A - 3 041 499<br><br>-- | 1,3,4, 6 | |
| E | US - A - 4 264 689 (P.R. MOSES)<br><br>* claims 2,3,6,7,8; column 2, lines 27-42; column 4, lines 39-45; example 3 *<br><br>& BE - A - 885 964<br><br>-- | 1,3,4, 6 | **TECHNICAL FIELDS SEARCHED (Int. Cl.3)** |
| E | US - A - 4 304 764 (ASHOK V. JOSHI)<br><br>* claim 1 *<br><br>------- | 1,6 | |

EPO Form 1503.2   06.78